Europäisches Patentamt

European Patent Office

Office européen des brevets

(19)

(11) Veröffentlichungsnummer: **0 071 077**

**A1**

(12) # EUROPÄISCHE PATENTANMELDUNG

(21) Anmeldenummer: 82106279.1

(22) Anmeldetag: 14.07.82

(51) Int. Cl.³: **B 60 J 7/00**
**B 60 H 1/26**

(30) Priorität: 28.07.81 DE 3129658

(43) Veröffentlichungstag der Anmeldung:
09.02.83 Patentblatt 83/6

(84) Benannte Vertragsstaaten:
DE FR GB IT NL SE

(71) Anmelder: Webasto-Werk W.Baier GmbH & Co.
Kraillinger Strasse 5 Stockdorf
D-8035 Gauting(DE)

(72) Erfinder: Igel, Richard
Luitpoldstrasse 21
D-8034 Geremering(DE)

(72) Erfinder: Lutz, Alfons
Nordendstrasse 68
D-8080 Emmering(DE)

(72) Erfinder: Jardin, Hans
Bachernerweg 1
D-8084 Inning(DE)

(72) Erfinder: Srdinko, Klaus Peter
Margaretenanger 3a
D-8044 Unterschleissheim(DE)

(54) **Fahrzeugdach mit einer durch einen Deckel verschliessbaren Dachöffnung.**

(57) Die Dachöffnung ist mit einem entlang ihres Randes umlaufenden im Querschnittsprofil etwa U-förmigen Rahmen (2) versehen. Ein Schenkel (8) des etwa U-förmigen Rahmens (2) ist höher als der andere und der höhere Schenkel (8) geht in einen etwa senkrecht zu diesem verlaufenden Flansch (9) über, der den zur Dachöffnung weisenden Rand der Dachhaut (1) des Fahrzeugdaches von der Fahrzeugaußenseite bedeckt. In der Nähe des höheren Schenkels an der Fahrzeuginnenseite ist eine Klemmvorrichtung angeordnet, mit der der Flansch (9) gegen die Dachhaut (1) des Fahrzeugdaches preßbar ist. Die Klemmvorrichtung besteht aus mehreren mit Hilfe von Schrauben (13) gegen das Fahrzeugdach preßbaren Spannblechen (4), die bei Lösen der Schrauben (13) so verschwenkbar sind, daß der umlaufende Rahmen (2) von der Fahrzeugaußenseite her in die Dachöffnung ohne Entfernen der Spannbleche (4) und Schrauben (13) einsetzbar ist.

FIG. 2

Die Erfindung betrifft ein Fahrzeugdach mit einer durch
einen Deckel verschließbaren Dachöffnung mit einem entlang des Randes der Dachöffnung umlaufenden im Querschnittsprofil etwa U-förmigen Rahmen, wobei ein
Schenkel des etwa U-förmigen Rahmens höher als der andere
ist und der höhere Schenkel in einen etwa senkrecht zu
diesem verlaufenden Flansch übergeht, der den zur Dachöffnung weisenden Rand der Dachhaut des Fahrzeugdaches
von der Fahrzeugaußenseite bedeckt, wobei in der Nähe
des höheren Schenkels an der Fahrzeuginnenseite eine
Klemmvorrichtung angeordnet ist, mit der der Flansch
gegen die Dachhaut des Fahrzeugdaches preßbar ist.

Ein Fahrzeugdach dieser Art ist aus der US-Patentschrift
4 133 576 bekannt. Die Klemmvorrichtung, mit der der
Rahmen bei diesem bekannten Fahrzeugdach mit der Dachhaut verbunden wird, besteht aus einer Schiene, die in
eine hinterschnittene Nut des Rahmens eingefügt ist
und die Gewindelöcher trägt. In diesen Gewindelöchern
sitzen Schrauben, die in der Art einer Schraubzwinge die
Dachhaut des Fahrzeugs zwischen dem Flansch und einer
Blechleiste einklemmen (siehe insbesondere Figur 10
der US-Patentschrift). Bei der Montage dieses Rahmens
wird dieser von der Fahrzeugaußenseite her in die vorbereitete Dachöffnung eingesetzt. Hierzu muß allerdings
die Klemmeinrichtung bestehend aus der Schiene und den
Schrauben sowie der Blechleiste entfernt werden. Erst
nach dem Einsetzen des Rahmens kann die Befestigungsschiene in die hinterschnittene Nut eingefügt und die Befestigungsschrauben angezogen werden. Aus diesem Grund
ist die Montage zeitraubend und dementsprechend teuer.

Aus der genannten US-Patentschrift ist es ebenfalls
bekannt, den Rahmen durch Verschweißen mit der Dachhaut zu befestigen (Spalte 2, Zeile 38). Auch diese Befestigungsart ist aufwendig und teuer.

Aus der europäischen Offenlegungsschrift O O14 798 ist ein Montagering für ein öffenbares Autodach, vorzugsweise ein Schiebedach, bekannt. Der Montagering, der einen den Dachhautrand überdeckenden Flansch aufweist, wird mit der Dachhaut dadurch verbunden, daß in diese Löcher gebohrt werden, in denen Schraubenbolzen des Flansches sitzen, welche durch Aufschrauben einer Mutter für den nötigen Anpreßdruck des Flansches gegen die Dachhaut sorgen. Auch diese Art der Montage ist zeitaufwendig, da einerseits Löcher gebohrt werden müssen und andererseits Einzelmuttern auf die genannten Bolzen geschraubt werden müssen.

Aus der deutschen Auslegeschrift 2 615 276 ist ein Fahrzeugdach mit einer durch einen Deckel verschließbaren Dachöffnung bekannt, bei der der Deckel im Bereich seiner Vorderkante um eine quer zur Fahrzeuglängsachse verlaufende  Achse durch eine lösbare Schwenkverbindung am Dachrahmen befestigt und mittels einer zwischen dem Dachrahmen und dem Deckel angeordneten, vom Deckel lösbaren Ausstellvorrichtung mit seiner Hinterkante aus der Dachebene nach oben ausschwenkbar ist. Auch dieses Fahrzeugdach weist einen umlaufenden,  im Querschnitt U-förmigen Rahmen auf. Dieser ist von innen an die feste Dachhaut geschweißt. Die Schweißung muß vor dem Lackieren vorgenommen sein, da sonst der Lack des Fahrzeuges leiden würde. Das bekannte Hebedach kann somit nicht nachträglich an einem Fahrzeug eingebaut werden. Wegen des erforderlichen Schweißvorganges ist der Einbau aufwendig und teuer.

Das Gleiche trifft zu für das aus der deutschen Patentschrift 23 31 329 bekannte Hebedach, das sich von dem
zuvor beschriebenen nur durch den Aufbau des Ausstellmechanismus unterscheidet.

Der Erfindung liegt die Aufgabe zugrunde, ein Fahrzeugdach mit einer Dachöffnung der eingangs genannten Art
derart weiterzuentwickeln, daß der Einbau - auch der
nachträgliche Einbau - mit möglichst wenig Handgriffen
vonstatten geht.

Diese Aufgabe ist dadurch gelöst, daß die Klemmvorrichtung aus mehreren mit Hilfe von Schrauben gegen die
Dachhaut des Fahrzeugdaches preßbaren Spannblechen besteht, die bei Lösen der Schrauben um eine Längsachse
so verschwenkbar sind, daß der umlaufende Rahmen von
der Fahrzeugaußenseite her in die Dachöffnung einsetzbar ist.

Dank der erfindungsgemäßen Maßnahme ist es möglich, das
Fahrzeugdach mit verschließbarer Dachöffnung vormontiert herzustellen. Die Befestigungsschrauben für die
Spannbleche sind dabei so weit wie möglich aus ihrer
Führung herausgedreht. Dadurch sind die Spannbleche um
ihre Längsachse schwenkbar. Wird der Rahmen in die ausgeschnittene Dachöffnung eingefügt, legen sich die Spannbleche an die Kante der Dachhaut an und werden von ihr
nach innen gedrückt. Erst wenn der Rahmen vollkommen
in der Öffnung der Dachhaut sitzt, fallen die Spannbleche
durch die Schwerkraft nach außen. Werden dann die Schrauben für die Befestigung der Spannbleche angezogen, so
werden die Spannbleche von der Fahrzeuginnenseite gegen
die Dachhaut gedrückt, wodurch der Steg des Rahmens von
außen auf die Dachhaut des Fahrzeugdaches gedrückt wird

- 4 -

und einen dichten Sitz des Rahmens in der Dachhaut bewirkt. Vorhandene Dachverstärkungen stören dabei nicht,
sondern können ebenfalls - eventuell nach Flachquetschen -
als Anschlag für die Spannbleche dienen.

Die Erfindung kann in Zusammenhang mit Fahrzeugdächern
jeder Art eingesetzt werden, die eine durch einen Deckel
verschließbare Dachöffnung aufweisen. Es kann sich dabei
um abnehmbare Dächer, oder um Hebedächer jeder beliebigen
Art handeln. Der Deckel kann beispielsweise durch zwei
Scharniere an der Vorderkante der Dachöffnung angelenkt
sein. Er könnte jedoch auch beispielsweise durch zwei
Teleskopwinden sowohl an seiner Vorderkante als auch
an seiner Hinterkante ausstellbar sein. Ist der Deckel
um seine Vorderkante schwenkbar, so kann beispielsweise
eine Anlenkung ähnlich der in der eingangs erörterten
deutschen Auslegeschrift 26 15 276 beschriebenen gewählt
werden.

Nach einer besonderen vorteilhaften Ausführungsform der
Erfindung ist das Spannblech im Querschnitt V-förmig,
wobei der Winkel zwischen seinen beiden Schenkeln stumpf
ist und in einem der beiden Profilschenkel A u s n e h -
mungen, z.B. R u n d - oder Langlöcher  a n g e -
ordnet sind. Die Länge des Spannbleches kann dabei so
gewählt werden, daß an einer Kante der Dachöffnungen
ein oder mehrere Spannbleche vorgesehen werden. Diese
V-förmige Ausbildung des Spannbleches eignet sich besonders für eine rasche Montage. Durch die Langlöcher
in einem Schenkel des V-förmigen Spannbleches kann dieses
mit Hilfe von Schrauben befestigt werden. Durch die
längliche Ausbildung der Schraubenlöcher ist sichergestellt, daß die Spannbleche beim Einsetzen in die
Öffnung des Fahrzeugdaches bei eingesetzten Befestigungsschrauben leicht verschwenkt werden können.

Nach einer weiteren besonders vorteilhaften Ausführungsform der Erfindung weist der Rahmen in der Ecke zwischen dem höheren Schenkel des U-förmigen Profils und dem Flansch einen Block auf, der eine Nut enthält, deren Seitenwände senkrecht zur Fläche des Flansches verlaufen. Eine solche Nut eignet sich besonders zur Aufnahme der Befestigungsschrauben für die Spannbleche. Dabei können die Befestigungsschrauben in diese Nut ihre Gewinde selbst schneiden oder es können in der Nut Teilgewinde vorgefertigt sein. Der Block dient gleichzeitig als Anschlag für eine Kante der Spannbleche, wenn diese mit Hilfe der Schrauben angezogen werden.

Nach einer weiteren vorteilhaften Ausführungsform ist vorgesehen, daß der Rahmen an der der Dachhaut zugewandten Seite des Flansches eine eine Dichtung aufnehmende Rille aufweist. Mit einer solchen Dichtung kann ein besonders dichter Sitz des Rahmens auf der Dachhaut erzielt werden.

Die Erfindung wird im folgenden anhand des in den Figuren schematisch dargestellten Ausführungsbeispiels näher erläutert. Es zeigt:

Fig. 1 eine Draufsicht eines Fahrzeugdaches, gemäß der Erfindung,

Fig. 2 einen Schnitt längs der Schnittlinie II-II der Fig. 1, wobei das Befestigungsspannblech lose sitzt und

Fig. 3 einen Schnitt längs der Schnittlinie III-III, wobei das Spannblech festgezogen ist.

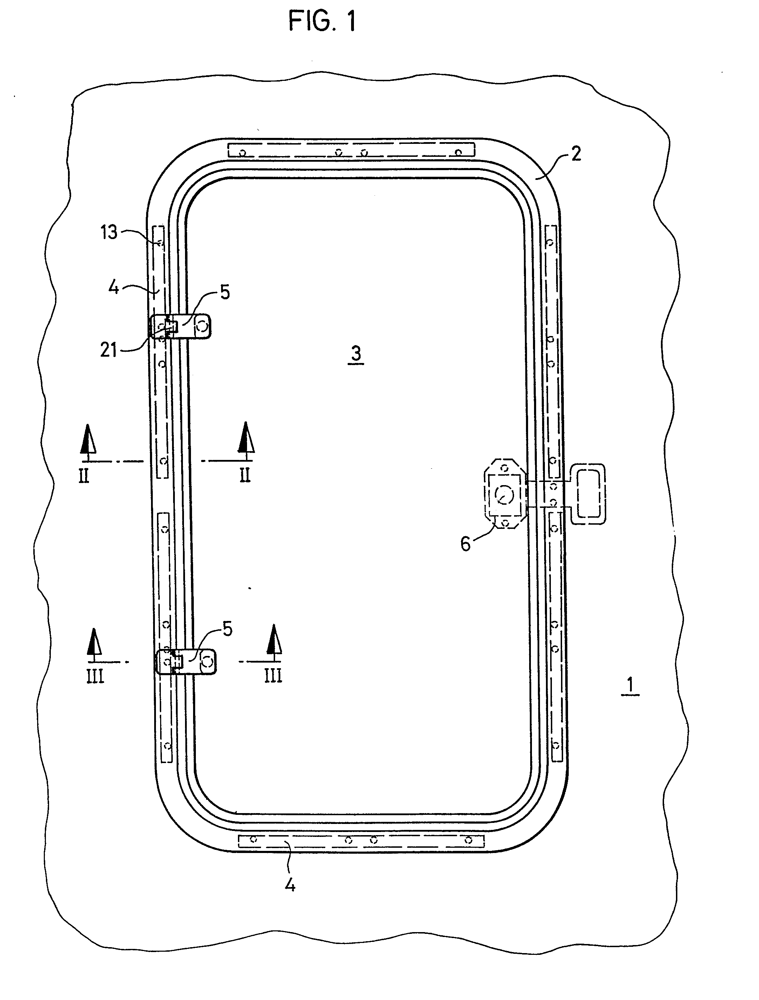

In Fig. 1 ist eine Draufsicht eines Fahrzeugdaches
gemäß der Erfindung zu erkennen. Eine Dachhaut 1 eines
Kraftfahrzeuges ist mit einer Öffnung versehen. In
dieser Öffnung sitzt ein Befestigungsrahmen 2. Der
Befestigungsrahmen trägt dicht einen Deckel 3 aus
Acrylglas oder Metall. Der Rahmen 2 ist mit Hilfe von
Spannblechen 4 an der Dachhaut 1 befestigt. Der Deckel 3
ist um eine Achse in der Nähe seiner Vorderkante verschwenkbar. Zu diesem Zweck ist er über zwei Scharniere
5 an dem vorderen Rahmenteil angelenkt. Zum Ausschwenken
des Deckels dient eine lediglich schematisch angedeutete Teleskopwinde 6. Anstelle der Teleskopwinde kann
auch ein Klappgriff vorgesehen sein.

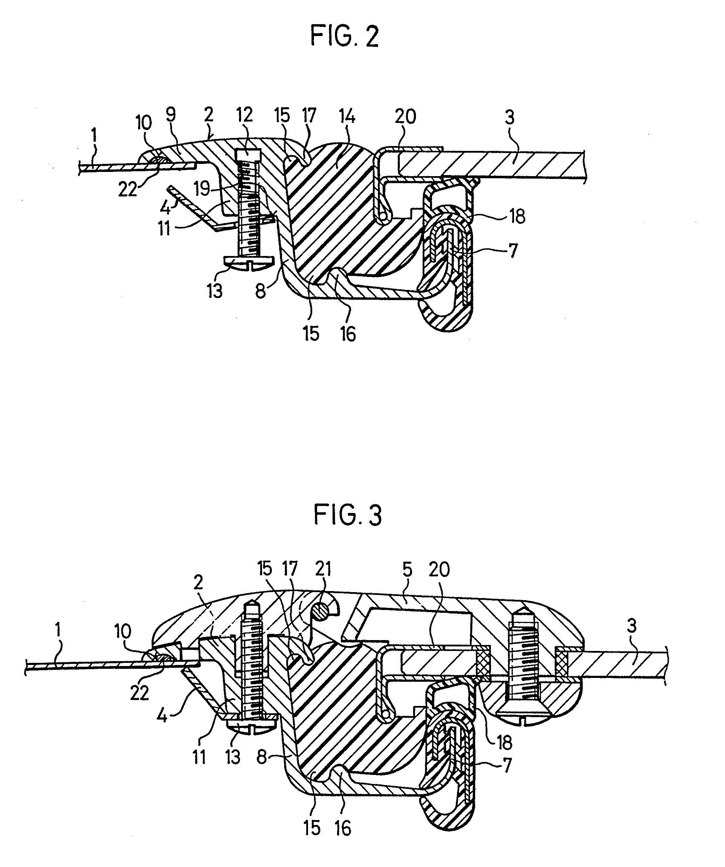

Besonders deutlich ist der Aufbau des erfindungsgemäßen Fahrzeugdaches in den Schnittzeichnungen der
Fig. 2 und 3 zu erkennen. In Fig. 2 ist mit Bezugszeichen
1 wiederum die Dachhaut des Fahrzeuges gekennzeichnet.
In einer Öffnung der Dachhaut sitzt der Rahmen 2. Dieser
Rahmen, der vorzugsweise aus Aluminium besteht, weist
im Profil einen etwa U-förmigen Querschnitt auf. Der
zur Mitte der Dachöffnung hin liegende Schenkel 7 des
U-Profils ist kürzer als der zum Rand der Dachhaut
hin liegende zweite Schenkel 8. Der zweite Schenkel 8
geht in einen Flansch 9 über, der auf der Dachhaut 1
aufliegt. Der Flansch 9 weist eine Rille 10 auf, in der
eine Dichtung (22) sitzen kann. In der
Ecke zwischen dem Flansch 9 und dem längeren Schenkel 8
befindet sich ein Block 11, der eine Nut 12 enthält.
In dem Block 11 sind Schrauben 13 eingeschraubt, die
in der Nut 12 selbst ihr Gewinde schneiden. Die Schraube 13 ragt durch ein Langloch des V-förmigen Spannbleches 4. In der Darstellung der Fig. 2 ist die Schraube 13 aus dem Gewinde in der Nut 12 soweit herausgedreht, daß sie gerade noch einen sicheren Halt findet. Folglich kann sich der freie Schenkel des Spannbleches 4
an der Seite des Blockes 11 anlegen. In dieser Position
kann der Rahmen 2 in die Dachöffnung der Dachhaut 1
von oben eingesetzt werden, ohne daß hierzu die Schrauben 13 und die Spannbleche 4 entfernt werden müßten.

In Fig. 2 ist des weiteren ein Deckel 3 zu erkennen,
der aus Acrylglas oder Metall besteht. Dieser weist
eine Einfassung 20 auf, mit der er auf einer Dichtung
14 ruht. Die Dichtung 14, die vorzugsweise aus Gummi
besteht, sitzt in dem U-förmigen Teil des Rahmens 2
und greift dort mit einem Wulst 15 hinter zwei Vorsprünge 16 und 17, so daß ein fester Sitz erzielt
ist. Des weiteren ist der Deckel 3 gegen den Rahmen 2
durch eine Dichtung 18 abgedichtet, die auf dem
kürzeren Schenkel 7 des Rahmens 2 sitzt.

Der in Fig. 3 dargestellte Schnitt verläuft durch das
Scharnier 5. Dieses besteht aus zwei gegeneinander um
einen Bolzen 21 verschwenkbaren Teilen, die mit dem
Flansch 9 des Rahmens 2 einerseits und mit dem Deckel 3
andererseits verschraubt sind. Im Ausführungsbeispiel
sind zwei Scharniere 5 an der Vorderkante des Deckels
vorgesehen (Fig. 1).

In der Darstellung der Fig. 3 ist die Schraube 13 eingedreht und das Spannblech 4 angezogen. Wie aus der Figur
deutlich zu erkennen ist, schlägt das Spannblech 4 mit
einer Außenkante in der Ecke zwischen dem Block 11 und
dem Schenkel 8 des Rahmens im Punkt 19 an. Beim Eindrehen der Schraube 13 dreht sich das Spannblech 4 um
diesen Anschlagpunkt 19, wobei der andere freie Schenkel sich in Richtung auf die Dachhaut 1 zubewegt. Durch
Anziehen der Schraube 13 kann der Anpreßdruck des Spannbleches 4 auf der Dachhaut 1 und somit der Anpreßdruck des Rahmens 2 an der Dachhaut 1 eingestellt
werden.

Webasto-Werk W. Baier GmbH & Co.


Fahrzeugdach mit einer durch einen Deckel verschließbaren Dachöffnung

---


P a t e n t a n s p r ü c h e


1. Fahrzeugdach mit einer durch einen Deckel (3) verschließbaren Dachöffnung mit einem entlang des Randes
der Dachöffnung umlaufenden im Querschnittsprofil
etwa U-förmigen Rahmen (2), wobei ein Schenkel (8) des
etwa U-förmigen Rahmens (2) höher als der andere ist
und der höhere Schenkel (8) in einen etwa senkrecht zu
diesem verlaufenden Flansch (9) übergeht, der den zur
Dachöffnung weisenden Rand der Dachhaut (1) des Fahrzeugdaches von der Fahrzeugaußenseite bedeckt, wobei
in der Nähe des höheren Schenkels (8) an der Fahrzeuginnenseite eine Klemmvorrichtung angeordnet ist, mit
der der Flansch (9) gegen die Dachhaut (1) des Fahrzeugdaches preßbar ist, dadurch g e k e n n z e i c h -
n e t , daß die Klemmvorrichtung aus mehreren mit Hilfe
von Schrauben (13) gegen die Dachhaut (1) des Fahrzeugdaches preßbaren Spannblechen (4) besteht, die bei
Lösen der Schrauben (13) so um eine Längsachse verschwenkbar sind, daß der umlaufende Rahmen (2) von der
Fahrzeugaußenseite her in die Dachöffnung einsetzbar
ist.


2. Fahrzeugdach nach Anspruch 1, dadurch g e k e n n -
z e i c h n e t , daß jedes Spannblech (4) im Querschnitt V-förmig ist, wobei der Winkel zwischen seinen
beiden Schenkeln stumpf ist, und daß in einem der beiden
Schenkel des Spannbleches (4)Ausnehmungen vorgesehen sind.

3. Fahrzeugdach nach Anspruch 1 oder 2, dadurch  g e k e n n -
   z e i c h n e t , daß der Rahmen (2) in der Ecke zwischen
   dem höheren Schenkel (8) und dem Flansch (9) einen
   Block (11) aufweist, der eine Nut (12) enthält, deren
   Seitenwände etwa senkrecht zu der Fläche des Flansches
   (9) verlaufen.

4. Fahrzeugdach nach einem der Ansprüche 1 bis 3, dadurch
   g e k e n n z e i c h n e t , daß der Rahmen (2) an der
   der Dachhaut (1) zugewandten Seite des Flansches (9) eine
   eine Dichtung aufnehmende Rille (10) aufweist.

FIG. 1

FIG. 2

FIG. 3

**0071077**

Nummer der Anmeldung

**Europäisches Patentamt**

**EUROPÄISCHER RECHERCHENBERICHT**

EP 82 10 6279.1

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int. Cl.) |
|---|---|---|---|
| A | GB - A - 2 027 792 (R.A. CLAY) <br> * Fig. 6 * <br> -- | 4 | B 60 J 7/00 <br> B 60 H 1/26 |
| A | US - A - 3 974 753 (D.C. BLOMGREN) <br> * Fig. 10 * <br> -- | 4 | |
| A | EP - A1-0 010 430 (BRITAX WEATHERSHIELDS) <br> ---- | | **RECHERCHIERTE SACHGEBIETE (Int. Cl.)** <br><br> B 60 H 1/00 <br> B 60 J 7/00 |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

| | Der vorliegende Recherchenbericht wurde für alle Patentansprüche erstellt. |
|---|---|

| Recherchenort | Abschlußdatum der Recherche | Prüfer |
|---|---|---|
| Berlin | 15-10-1982 | BECKER |

EPA form 1503.1   06.78